# EUROPEAN PATENT APPLICATION

(11) **EP 4 311 656 A1**
(43) Date of publication of application: **31.01.2024**
(21) Application number: 22187287.2
(22) Date of filing: 27.07.2022
(51) Int. Cl.: B29C 64/118, B29C 64/393, B33Y 10/00, B33Y 40/20, B33Y 50/02

(54) **METHOD OF PRODUCING AN OBJECT, OBJECT, AND AIRCRAFT OR SPACECRAFT**

(71) Applicant: Airbus Operations GmbH, 21129 Hamburg (DE)
(72) Inventor: Zecheru, Mihai Ioan, 21129 Hamburg (DE)

(57) **Abstract**

A method of producing an object (11a, 11b-16b, 11c, 11d, 11e, 11f, 12f, 11g, 11h), the method comprising: 3D-printing (S2) a part (1a-1e, 1f, 1f', 1g-1i, 1k, 1m, 1n) or at least a portion thereof in layers (101-105); and post-processing (S3) the 3D-printed part to obtain the object. The post-processing includes causing deformation (S34) of the part in such a manner that a shape of a main surface of extension (SE) of the layers is modified. Furthermore the disclosure relates to an object (11a, 11b-16b, 11c, 11d, 11e, 11f, 12f, 11g, 11h) produced or producible using such a method, and to an aircraft or spacecraft (1000) comprising such an object.

## Description

### FIELD OF THE INVENTION

The invention relates to a method of producing an object. Furthermore, the invention relates to an object produced or producible using such a method, and to an aircraft or spacecraft comprising such an object.

### TECHNICAL BACKGROUND

Although the invention may be useful in many fields of technology, the invention and the underlying problem will be explained in the following in greater detail and exemplary manner with regard to aircraft or spacecraft production, but without limiting the invention to that effect.

Various methods of additive manufacturing, or 3D-printing, have already been described, including, for instance, so-called fused deposition modeling, stereolithography, or selective laser sintering. Such methods include forming a three-dimensional object in a generative manner starting from suitable data, representing a three-dimensional model of the object, via successive addition of material, in particular in a layered manner. 3D-printing offers great flexibility and freedom regarding the geometrical features that can be created and allows complex objects having intricate shapes to be made, e.g. objects that are difficult to produce using other manufacturing techniques. 3D-printing can help to reduce the cost of manufacturing complex parts, improve the so-called Fly/Buy ratio, and enhance the speed of customization and/or retrofitting, as customized parts or spare parts can be produced flexibly as needed.

Moreover, so-called four-dimensional printing or 4D-printing has been described. In such a process, a 3D-printed object is able to change its shape in response to environmental conditions which may involve e.g. temperature, humidity or voltage.

In particular, the accuracy and strength of objects produced by 3D-printing processes, the internal structure of the material from which the object is made, and the necessary time and cost involved in production of the object depend on the 3D-printing method actually chosen.

Both fused deposition modeling and selective laser sintering may be useful for the production of components for aerospace applications, where weight-saving components well adapted to the intended loads are particularly desirable.

For example, selective laser sintering can be performed based on metal or polymer materials and makes it possible to obtain parts having advantageous mechanical properties. Yet, selective laser sintering involves considerable use of energy and is comparatively costly. Meanwhile, by fused deposition modeling, also called fused filament fabrication, parts can be produced at low cost and with relatively low usage of energy and starting material, and thus in a more sustainable manner, but regarding the mechanical properties of the final part, anisotropy of the printed part and in particular the strength of the connection of one layer of filaments to an adjacent layer is to be taken into account.

### SUMMARY OF THE INVENTION

In view of the above, the problem to be solved by the invention is to produce objects, in particular complex objects, at reduced cost and in an improved, sustainable manner, and at the same time to ensure advantageous mechanical properties of the object so that the object can be used, for instance, as a load-bearing component.

According to the invention, this problem is solved by a method comprising the features of claim 1 and/or by an object comprising the features of claim 14 and/or by an aircraft or spacecraft comprising the features of claim 15.

Accordingly, the present invention provides a method of producing an object, wherein the method comprises:
- 3D-printing a part or at least a portion thereof in layers; and
- post-processing the 3D-printed part to obtain the object, wherein the post-processing includes causing deformation of the 3D-printed part in such a manner that a shape of a main surface of extension of the layers is modified.

Further, the invention proposes an object produced or producible using the method provided in accordance with the invention.

Still further, according to the invention, an aircraft or spacecraft comprising such an object is proposed.

An idea underlying the present invention is to provide a manufacturing approach which uses 3D printing techniques, such as "classical" 3D printing techniques described hitherto, for producing an intermediate or "raw" 3D-printed part. This part is then completed to reach its final form under further modification by deforming the part, or at least a portion or section thereof. In particular, the deformation can be brought about using trained personnel and/or using one or more machines or devices, such as e.g. a robot, an automatic manufacturing line, or similar.

The deformation brought about modifies the shape of a main surface of extension of the layers, from which the part is made in a layered manner, whereby the layered structure can in particular be partially re-oriented so as to provide the desired geometry and at the same time enable an advantageous direction of action, relativ to the layers, of principal loads for which the object is designed. In particular, principal tension loads can in this way be prevented from acting across small cross-sections and transverse to the layers.

The invention thus combines the flexibility with respect to design and geometry offered by 3D printing with an additional step or sequence of steps, in which the shape of the printed part is changed. Thereby, anisotropy of the printed material and differences in mechanical load-bearing capacity in different directions can be addressed.

By completing the finally desired shape using an operation of deforming the printed shape, the invention makes it possible to produce weight-saving and complex objects at reduced cost and with reduced effort, manpower and energy use. This helps to produce the object in a more sustainable manner.

Advantageous improvements and developments of the invention are contained in the dependent claims as well as in the description referring to the drawings.

According to a development, the step of 3D-printing the part includes additively manufacturing the part or the portion thereof using a process of fused deposition modeling or fused filament fabrication and/or the step of 3D-printing the part includes additively manufacturing the part or the portion thereof from a synthetic material, in particular a thermoplastic synthetic material. 3D-printing using a fused filament of material, in particular thermoplastic, incurs comparatively low cost. At the same time, the mechanical properties of the final object can be significantly improved in the post-processing step. Further, in particular, thermoplastic material can be heated and thereby softened again, even several times as necessary or desired. Thus, use can be made of advantageous properties of thermoplastics and of a comparatively cheap printing process, while an object can be produced that has enhanced mechanical properties and can be used as a load-bearing structural or non-structural component.

For example, the step of 3D-printing includes melting, extruding and depositing a thermoplastic as a filament layer by layer. Using the method of the invention, such a part, which already has good mechanical properties in two dimensions, in particular parallel to the surface of extension of these layers, can be transformed into an object, or into at least a portion thereof, which is mechanical robust and stable in three dimensions, and which in particular has good resistance in particular also to tensile and shear loads in the 3D printing direction.

In particular, the thermoplastic synthetic material used in the step of 3D-printing the part may be a polyetherimide or PEI. PEI is a high-quality, high-performance thermoplastic which is lightweight and has good mechanical properties. However, it is conceivable to use other kinds of thermoplastic materials instead, preferably high-performance thermoplastic materials having good mechanical properties.

In further developments, reinforcing fibres, e.g. long or short fibres, may be embedded in the thermoplastic synthetic material, in particular in the filament. This additionally may contribute to further improve the mechanical load-bearing capacity of the finished object.

In a further development, the step of 3D-printing the part may include additively manufacturing the part or the portion thereof using a process of selective laser sintering. Even though selective laser sintering may incur higher cost for the 3D-printing, it may be useful to extend the functionality of a part printed using such a process, depending on (a) desired application(s). Selective laser sintering yields printed parts of high quality and can be performed using metal or thermoplastic as a starting material.

According to a development, the 3D-printed part comprises at least a plate-shaped section, the layers being arranged one on top of another in a transverse direction of the plate-shaped section. Further, the post-processing in particular includes causing deformation of the plate-shaped section. Such a section can be deformed in a relatively simple manner to assume a multitude of shapes, extending in particular in a third direction transverse to the original plane of extension of the plate-shaped section.

According to a development, the method includes, prior to 3D-printing, steps of
- defining a 3D target final shape of the object;
- defining a 3D target shape of the 3D-printed part; and
- defining a re-shaping operation or a sequence of re-shaping operations capable of transforming the 3D-printed part into the object or into a portion thereof.

According to a further development, the method includes, prior to 3D-printing, steps of
- defining a plurality of 3D target final shapes;
- defining a 3D target shape of the 3D-printed part; and
- defining, for each one of the plurality of 3D target final shapes, an assigned re-shaping operation or assigned sequence of re-shaping operations capable of transforming the 3D-printed part into an object having the one of the plurality of 3D target final shapes or into a portion thereof.

According to a development, the method comprises producing two or more objects having different final shapes, or portions of such objects, from 3D-printed parts each having the same shape by deformation of the 3D-printed part in a different manner in the post-processing step in each case. In this manner, objects of different type, e.g. for different applications or functions, may be produced in an even more cost-effective manner from identical 3D-printed parts. Cost of design as well as cost and effort for defining shapes and printing processes, slicing and generation of so-called _{"}G-code" for various 3D-printed parts can thus advantageously be saved, while at the same time, a family of products, which can be termed a "product line" or "component line", can be produced. In other words, with one raw part design, several different functional objects can be manufactured in an efficient manner. Parts management may be facilitated as well, in this manner.

According to a development, deformation of the part in the step of post-processing comprises deforming the part by applying external force and/or pressure. Such a post-processing can be implemented in a simple and cost-effective manner, either manually or using an automated device. A mechanical mechanism, a press, or a vacuum bag may be used, for example.

According to a development, the step of post-processing the 3D-printed part includes introducing heat into the 3D-printed part or causing heat to be generated or released in or on the 3D-printed part. More particularly, the step of post-processing the 3D-printed part includes locally introducing heat into the 3D-printed part or causing heat to be locally generated or released in or on the 3D-printed part. This makes it possible to facilitate a precise deformation of the 3D-printed part, which in particular becomes persistent after cooling of the part, by resolidification of the thermoplastic for example. In particular, the comparatively low heat conductivity of thermoplastics may facilitate a concentration of heat and thus a precise heating of the 3D-printed part in the desired area.

According to a development, the step of post-processing the 3D-printed part includes masking the 3D-printed part. In particular, the masking is carried out prior to exposing the part to an external source of heat. In this manner, it can be made sure that heat from the external source is introduced locally into the 3D-printed part at a pre-defined, desired location or area.

Preferably, the heat is locally introduced or caused to be locally generated or released in such a manner that the temperature of the 3D-printed part is locally increased to a value below the glass transition temperature of the material from which the 3D-printed part is formed, in particular below the glass-transition temperature of the thermoplastic synthetic material, such as PEI, for example.

According to a development, causing deformation of the part in the step of post-processing includes deforming the part by bending the part or a portion thereof. One or more bending steps can be implemented in a simple manner, using relatively simple tools. In combination with the preceding 3D printing, complex, lightweight, mechanically stable objects can be obtained at reduced cost and can be used for example as load-bearing components.

According to a development, causing deformation of the part in the step of post-processing includes deforming the part by deep-drawing or press-forming or embossing or impressing the part or a portion thereof. Such deforming operations further help to expand the range of possible shapes of the final object than can be obtained in efficient manner. For example, by processes of deep-drawing, press-forming, embossing or impressing, edges or flat regions can be shaped to provide stiffness, for example by added beads, dimples or similar for reinforcement.

In this manner, by selecting one or more of such processes of deforming and/or by selecting a combination thereof, a great variety of re-shaping operations to obtain the object may be defined. A flexible and versatile production of objects hence becomes possible.

Further, in particular, the deformation of the part in the step of post-processing is not reversible by mere removal of a source of energy, such as a heat source, but the deformation caused in the step of post-processing is persistent. Yet, in many embodiments, the deformation in principle can be reversed e.g. by purposefully adding heat to soften the thermoplastic once again.

In a further improvement, the step of 3D-printing the part includes providing the part, and in particular the plate-shaped section, with one or more regions of added thickness laterally with respect to a pre-defined area where, during the step of post-processing, the heat is locally introduced or caused to be locally generated or released. Preferably, in the step of 3D-printing, at least one region of added thickness is provided on each one of both sides of the area, and in particular on each one of both sides of a pre-defined bending line. Such regions of added thickness contribute to an improved and even more accurate deformation, e.g. bending in a precise manner along the pre-defined bending line. Each of the regions of added thickness may be formed as a rib-like region, e.g. parallel to the bending line, on the plate-shaped section. The regions of added thickness may, in particular, be arranged in a manner symmetric with respect to the area where the heat is introduced, generated or released and/or with respect to the bending line.

Preferably, each region of added thickness may be formed with a height above a face of the plate-shaped section of between 0.1 and 0.3 times the thickness of the plate-shaped section and/or with a width approximately equal to the thickness of the plate-shaped section and/or each region of added thickness may be arranged at a distance from a bending line of between approximately 1.5 and 3 times the thickness of the plate-shaped section.

According to a development, the method is a method of producing a component of an aircraft or spacecraft or of a land vehicle or watercraft, or a component of a defense or security device, or a component for use in or as part of a building, or a component of a medical device, or a component of a consumer good, or a package or an element thereof. Hence, reliable components can be produced in a sustainable and cost-saving manner for a great variety of applications and uses.

According to a development, the method is a method of producing a component for use in a new product or device or for retrofitting an existing product or device. In this manner, a more cost-effective and sustainable production of new products or retrofit may be achieved.

The object produced or producible by the method proposed in accordance with the invention may be a load-bearing structural component or may be a load-bearing component adapted to perform a non-structural function or a component not provided for bearing significant loads.

The improvements, enhancements and developments of the present invention may be arbitrarily combined with each other whenever this makes sense. Moreover, other possible enhancements, developments and implementations of the present invention comprise combinations of features of the invention which have been described above or will be described in the following in relation to the detailed description of embodiments, even where such a combination has not been expressly mentioned.

### BRIEF DESCRIPTION OF THE DRAWINGS

The invention will be explained in the following with reference to the schematic figures of the drawings which illustrate embodiments of the invention. Herein:
- Fig. 1A: schematically shows a 3D-printed part which will be post-processed in accordance with a first embodiment of the invention;
- Fig. 1B: shows a schematic sectional view I-I of the part of Fig. 1A and a schematic top view II including an exemplary filament deposited to form a layer;
- Fig. 1C: shows the 3D-printed part of Fig. 1A, in a masked state;
- Fig. 1D: shows the 3D-printed and masked part of Fig. 1C, partially clamped using a clamping device;
- Fig. 1E: shows a finished object obtained in accordance with the first embodiment, in a schematic side view;
- Fig. 1F: shows the finished object of Fig. 1E in a schematic sectional view, displaying layers of material;
- Fig. 2A: shows a schematic diagram illustrating a method according to a second embodiment of the invention;
- Fig. 2B: shows a further schematic diagram illustrating substeps of a post-processing step of the method according to the second embodiment;
- Fig. 3: shows a plurality of objects that can be obtained from several 3D-printed parts of the same type, in accordance with the second embodiment;
- Fig. 4A-4B: show a 3D-printed part and a finished object obtained using a method in accordance with a third embodiment of the invention;
- Fig. 5A-5C: show a 3D-printed part and a finished object obtained using a method in accordance with a fourth embodiment of the invention;
- Fig. 6A-6B: show a 3D-printed part and a finished object obtained using a method in accordance with a fifth embodiment of the invention;
- Fig. 7A-7C: show two 3D-printed post-processed parts and finished objects obtained using a method in accordance with a sixth embodiment of the invention;
- Fig. 8A-8C: show a 3D-printed part and a finished object obtained using a method in accordance with a seventh embodiment of the invention;
- Fig. 8D: shows a 3D-printed tool configured for being used during a post-processing step in the method of the seventh embodiment;
- Fig. 9A-9C: show a 3D-printed part and a finished object obtained using a method in accordance with an eighth embodiment of the invention;
- Fig. 10: schematically shows a sectional view of a 3D-printed part in a plane perpendicular to a projected bending line;
- Fig. 11: shows an exemplary aircraft in which an object obtained according to one of the embodiments described herein may be used;
- Fig. 12: schematically shows (a) a top view of a part, during production thereof using 3D printing, as well as (b) a sectional view III-III of this part, in accordance with a ninth embodiment of the invention;
- Fig. 13: schematically shows (a) a top view of a part, during production thereof using 3D printing, as well as (b) a sectional view IV-IV of this part, in accordance with a tenth embodiment of the invention; and
- Fig. 14: schematically shows (a) a top view of a part, during production thereof using 3D printing, as well as (b) a sectional view V-V of this part, in accordance with an eleventh embodiment of the invention.

The enclosed drawings are intended to illustrate embodiments of the invention so that the invention may be further understood. The drawings, in conjunction with the description, are intended to explain principles and concepts of the invention. Other embodiments and many of the advantages described may be inferred from the drawings. Elements of the drawings are not necessarily drawn to scale.

Elements, features and components which are identical or which have the same function or effect have been labeled in the drawings using the same reference signs, except where explicitely stated otherwise.

### DETAILED DESCRIPTION OF EMBODIMENTS

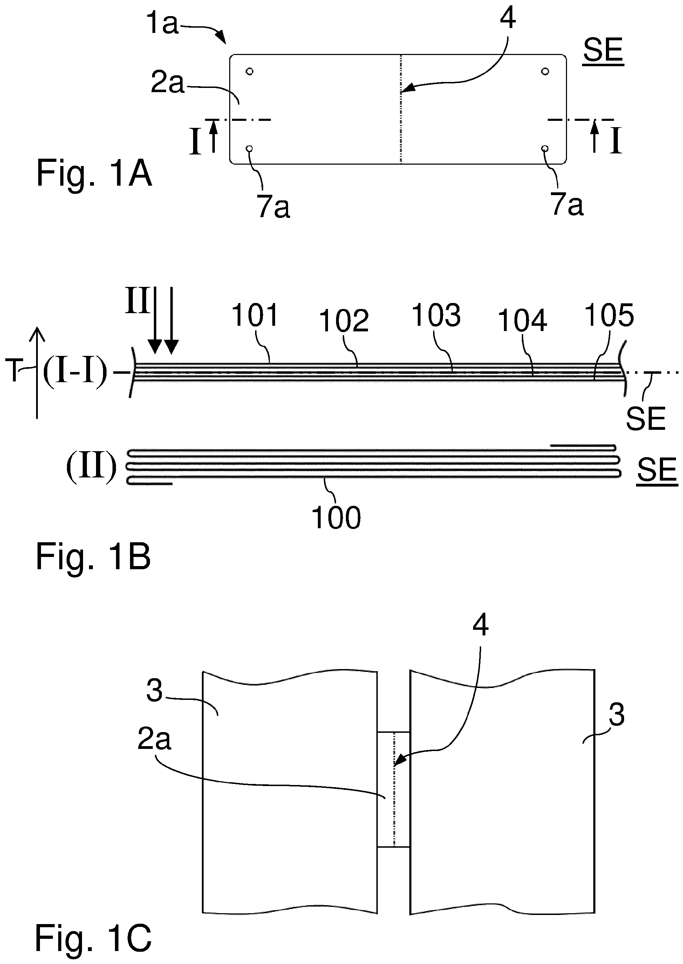

Figs. 1A-F illustrate a method of a first embodiment as well as an object 11a obtained using this method. The object 11a may be a structural component, e.g. of an aircraft or spacecraft structure, or a load-bearing component of another, non-structural type, e.g. a bracket for attaching equipment, or the component may be a part that is not provided for supporting significant loads, e.g. a component for a fairing or for an interior trim.

Fig. 1A schematically shows a 3D-printed part 1a which has been designed using a suitable software tool for 3D design, and which then has been printed in a layered manner using a process known as fused deposition modeling or fused filament fabrication. The part 1a has a comparatively simple shape, shown in Fig. 1A to provide a simple and illustrative example, and has been made from PLA or polylactic acid. While PLA has been used as a thermoplastic material in the example of Fig. 1A for illustration, other thermoplastics which can be deposited as an extruded filament, such as polyetherimide or PEI, may be used, e.g. for applications requiring considerable load-bearing capacity. The part 1a is essentially of plate-type shape and formed with a plate-shaped section 2a that has been provided, during 3D-printing, with a number of holes 7a. Fig. 1A also indicates a pre-defined bending line 4. The plane of the drawing in Fig. 1A corresponds to a main surface of extension SE of the layers of material forming the part 1a.

Fig. 1B shows a schematic section I-I through the part 1a, illustrating a few layers 101-105. Only a few layers 101-105 are displayed in Fig. 1B, but any appropriate number of layers of extruded material may be deposited to form the part 1a. A plan view II of the uppermost layer 101 in Fig. 1B illustrates that the layers are formed by depositing thermoplastic material, after heating and extruding it, as a filament 100 onto the layer beneath.The pattern, and/or the orientation thereof, according to which the filament 100 is deposited may vary from layer to layer. Seen in a transverse direction T of the plate-shaped section 2a, the section 2a comprises the layers 101-105 arranged one on top of another.

In some variants, reinforcing fibres may be embedded in the thermoplastic to further enhance the mechanical properties.

In a partially manual process, the desired bending line 4 may be marked on the surface of the completed 3D-printed part 1a, yet, in an automated process, such marking might be omitted. Then, see Fig. 1C, the part 1a is masked by partially covering the part 1a with a masking material 3, e.g. a metallic tape, for instance aluminum tape ("speed tape"), on both main sides of the part 1a, except for an area containing the bending line 4. The masking can be performed manually or in an automated manner.

The part 1a is then clamped using a clamping device 5, having clamping portions 5', 5", or using another kind of jig, in order to firmly hold the part 1a and enable bending along line 4.

The area in the vicinity of the line 4, not covered by tape 3, is exposed to heat from an external source, such as a hot-air blower or heat gun, or another appropriate device, in order to soften the material from which the layers 101-105 are formed. Meanwhile, the masking material 3 protects the remaining portions of the part 1a from the heat. Softening of those remaining, covered portions is hence prevented. The so-called speed tape 3 dissipates the externally provided heat in the masked regions, where heating of the part 1a is not intended.

Thus, in the masked regions, the temperature of the part 1a will remain far below the temperature intended for subsequent bending along line 4. Preferably, the thermoplastic material of the layers 101-105 is heated locally, in the vicinity of the line 4, to an increased temperature value, but below the glass-transition temperature of the thermoplastic.

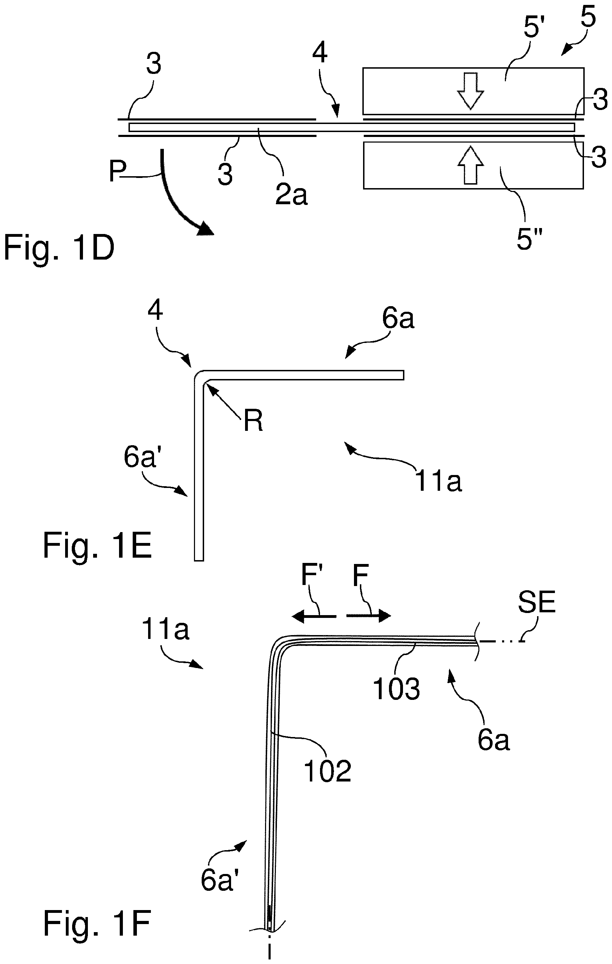

Then, the plate-shaped section 2a of part 1a is bent along line 4, through an exemplary angle of approximately 90 degrees, as illustrated in schematic manner by arrow P in Fig. 1D, using external force. After cooling and demasking, see Fig. 1E, an exemplary, bracket-like object 11a is obtained which comprises two legs 6a, 6a'. Fig. 1E also indicates a bending radius R at the location of the bending line 4.

Fig. 1F illustrates the shape of the layers within the plate-shaped section 2a. For purposes of illustration, only layers 102, 103 are indicated. The main surface of extension SE has been deformed during the bending step, and the layers follow the overall angled shape of the object 11a.

The object 11a can e.g. be used as a bracket-type element, and loads can be applied to both of the legs 6a, 6a'. In particular, a tensile load F = F' may e.g. act parallel to one of the legs 6a. As the exemplary tensile load F, F' acts substantially parallel to the layers in leg 6a, and as the layers are joined to each other across a relatively large area in both legs 6a, 6a', the object 11a can be used as a load-bearing component which has advantageous mechanical properties. In particular, compared to an angle-type bracket directly 3D-printed by extruding and depositing the filament 100 in layers to directly form a final shape corresponding to the shape in Fig. 1E, the object 11a can sustain considerably higher mechanical loads. Also, the resistance to shear loads of leg 6a' is considerably improved.

Meanwhile, the object 11a can be produced in a cost-effective and material-saving, sustainable manner via 3D printing the part 1a by depositing the filament 100 in layers, and via subsequent post-processing which in particular includes the masking explained with reference to Fig. 1C as well as the clamping, local heating and bending explained with reference to Fig. 1D above.

Figs. 1A-1F thus illustrate that the method uses the potential in particular of thermoplastic materials to be re-shaped to a final form, after a 3D printing step. This enhances the potential of parts made by 3D-printing, e.g. by fused deposition modeling, discussed above, or instead by selective laser sintering.

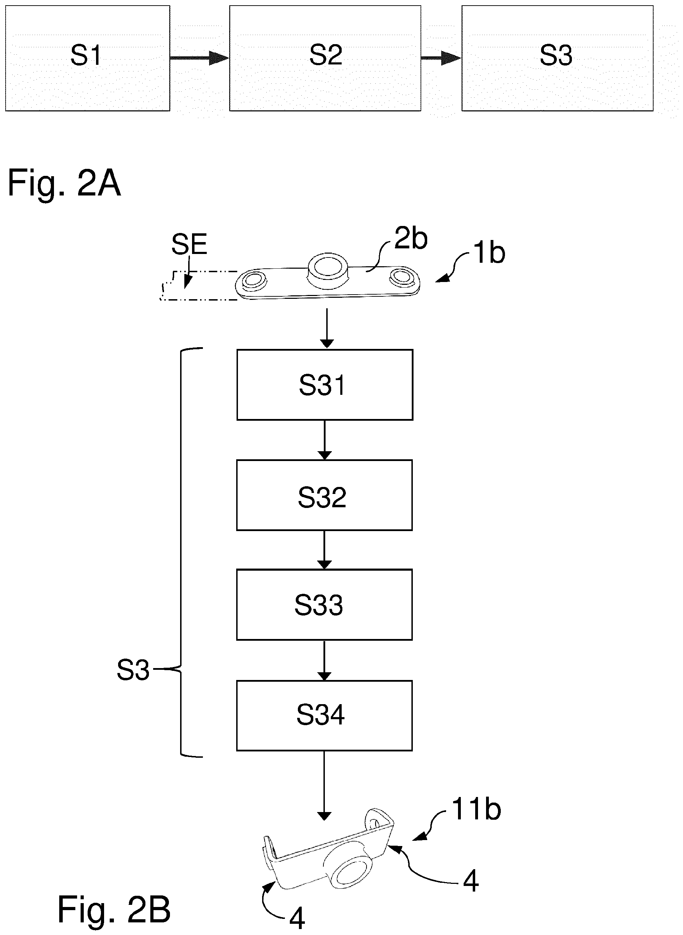

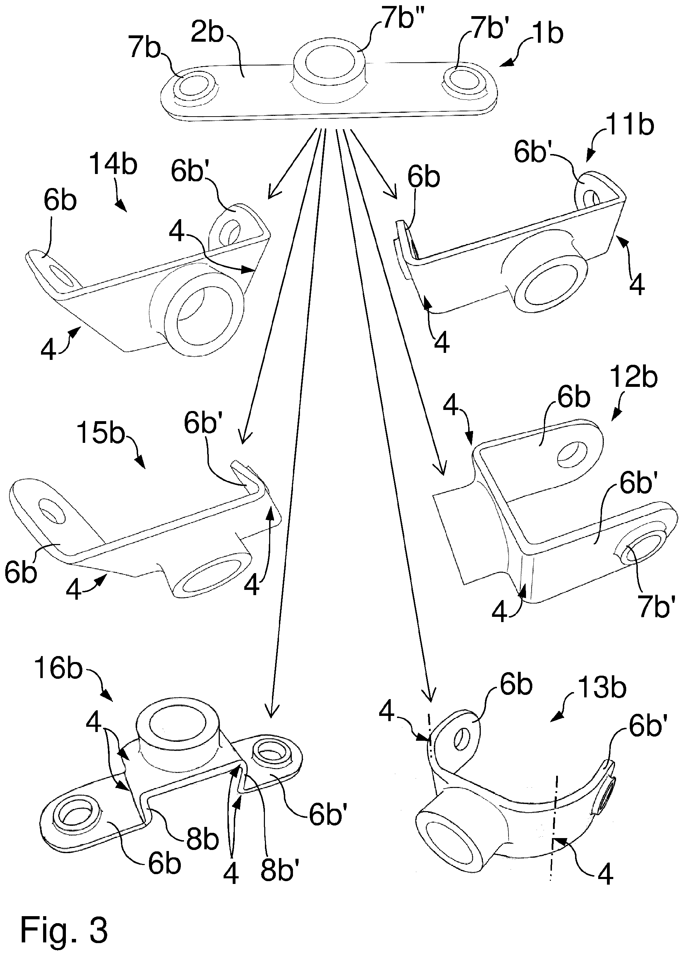

Figs. 2A-2B and 3 schematically illustrate a second embodiment of the invention.

Step S1 includes defining at least one 3D target final shape of an object 11b to be made, defining a 3D target shape of a 3D-printed part 1b from which the object 11b is obtainable by post-processing, and defining a re-shaping operation or a sequence of re-shaping operations capable of transforming the 3D-printed part 1b into the object 11b, or, in case the final object is made from several 3D printed parts, into a portion of the final object.

In step S1, a part 1b to be 3D-printed is designed using a suitable 3D software tool. In the design step S1, the intended post-processing, including one or more projected substeps of deforming or re-shaping the part 1b, is taken into account, in order to secure the structural integrity and functionality of an object, e.g. 11b, obtained from the part 1b. In particular, step S1 may take into account tolerances of the finally produced object 11b, which may not be the same as the tolerances for the 3D printed part 1b. In this manner, data representing the 3D target shape of the part 1b and associated printing instructions, adapted to the 3D printing method chosen, is obtained in step S1. Also, step S1 may include manipulating such data or G-code, e.g. after computational slicing, to adapt the infill and/or routing of the printed material, e.g. of the filament 100, to further improve the structural properties of the object 11b. Specifically, material concentrations and other material properties could be provided which further facilitate the post-processing by heating and deforming. For instance, for a bent flange of a bracket as discussed above with respect to Figs. 1A-1F and having a defined bending radius R, the G-code could be adapted to produce a desired arrangement and/or orientation of the material during the additive manufacturing procedure, by adapting the infill and the printing of the upper and lower surfaces of the printed part.

In step S2, based on a data set obtained in step S1 which includes a suitable representation of the 3D target shape of the part 1b to be 3D-printed, additive manufacturing of the part 1b is carried out. In particular, the part 1b may be made by fused deposition modeling or fused filament fabrication, as described above for the first embodiment. However, it is conceivable to use an additive manufacturing process of different type instead, such as selective laser sintering, by which the part 1b can be produced from thermoplastic or, alternatively, from metal.

After completing 3D-printing the part 1b, the part 1b is post-processed in a subsequent method step S3. In step S3, the 3D printed part 1b is modified to achieve its final form for functionality. Step S3 also includes preparation steps for the deformation or re-shaping operation(s).

The post-processing step S3 is schematically illustrated in Fig. 2B in more detail and comprises at least substeps S31, S32, S33, S34. Substep S31 comprises, in particular in the case of manual post-processing, operations of defining one or more locations where deformation is to be brought about, such as defining one or more bending lines 4. In this case, substep S31 may include measuring and marking the position(s) of the line(s) 4. In an automated process, in which the location(s) where deformation is intended are already defined within the data set obtained in step S1, measuring and marking in substep S31 may be omitted or may be automized.

Substep S32 comprises masking the 3D printed part 1b in preparation for local introduction of heat using an external device. In the second embodiment, areas around each of two bending lines 4 remain uncovered by masking material 3. In variants in which heat is released or generated locally within the part 1b instead of being externally provided, as will be described below, masking in substep S32 may be omitted. Preferably, substep S32 can also include holding or clamping the part 1b using a clamping device or jig that allows subsequent substeps of heating and deforming.

In substep S33, heat is introduced locally into the part 1b, e.g. using an external device such as a hot-air gun, or heat is caused to be locally generated or released in or on the 3D-printed part 1b, in the areas around each of the bending lines 4.

Subsequently, in substep S34, the locally heated part 1b is processed by deforming a plate-shaped section 2b of the part 1b by bending along two lines 4. A main surface of extension SE of layers, from which the plate-shaped section 2b has been formed during step S2, is deformed thereby. Substep S34 may include deforming the plate-shaped section 2b using manual tooling and/or using automization. Substep S34 preferably is a comparatively fast and cost-saving post-processing step, which may be performed using common tools and/or in an automized manner.

Substep S34 is followed by cooling and preferably by subsequent removal of the masking material 3, which is not explicitely indicated in Fig. 2B. Cooling and removal of masking material 3 may be followed by one or more further finishing steps, such as cleaning, labeling, etc.

The exemplary 3D printed part 1b, displayed in Figs. 2B and 3, comprises the elongate plate-shaped section 2b as well as three through-holes 7b, 7b' and 7b" which are each surrounded by an approximately circular, printed raised rim. The middle hole 7b" has a larger diameter and higher rim than the outer holes 7b, 7b'. The holes 7b, 7b', 7b" may be provided, for instance for attachment purposes.

Fig. 3 shows that a plurality of differently shaped objects 11b-16b, or a "product line", can be obtained by post-processing identical basic parts 1b. The 3D-printed part 1b thus has the same geometry, and printing process, for each of the final objects 11b-16b, but the post-processing step S3 differs for each of the objects 11b-16b.

In Fig. 3, the plate-shaped section 2b may be deformed in such a manner as to obtain the object 11b, which has two parallel, short legs 6b, 6b' each comprising one of the holes 7b, 7b'. In this case, the bending lines 4 are oriented parallel to each other and perpendicular to longitudinal edges of the plate-shaped section 2b.

Alternatively, an object 12b with longer legs 6b, 6b' could be formed by a different post-processing step S3 from the part 1b.

Further, alternatively, an object 13b with rounded legs 6b, 6b' can be obtained from the part 1b by bending the plate-shaped section 2b in substep S34 with a significantly larger bending radius R.

Moreover, an object 14b can be formed from the part 1b in which the legs 6b, 6b' are not parallel to each other, by defining non-parallel bending lines 4 which are each not perpendicular to the longitudinal edges of the section 2b, but are inclined with respect to these edges instead.

Still further, an object 15b can be produced by post-processing the part 1b, wherein the object 15b comprises parallel short legs 6b, 6b', but wherein the bending lines 4 are again inclined with respect to the longitudinal edges of the plate-shaped section 2b instead of being perpendicular thereto.

Furthermore, an object 16b can be made from the part 1b in which end portions of the legs 6b, 6b' are parallel to a center portion of the plate-shaped section 2b which comprises the hole 7b". In this case, four bending lines 4 have been defined to provide each leg 6b, 6b' with a step-like offset, each leg being connected to the center portion of the plate-shaped section 2b by an intermediate leg portion 8b, 8b'.

It is understood that starting from the basic 3D printed part 1b, objects of further, different shapes could also be obtained.

In order to produce the objects 11b-16b, step S1 includes defining a plurality of 3D target final shapes, defining the 3D target shape of the 3D-printed part 1b, and defining, for each one of the plurality of 3D target final shapes, an assigned re-shaping operation or assigned sequence of re-shaping operations. The defined re-shaping operation(s) is/are capable of transforming the 3D-printed part 1b into one of the objects 11b-16b. Each one of the plurality of defined 3D target final shapes is assigned to one of the objects 11b-16b.

Thus, starting from a single design of a 3D-printed part 1b, an entire "component line" of components for different uses can be produced in a cost-saving manner, saving effort, manpower and material. As only a dataset for printing a single part design several times is needed, the processing and memory requirements can be reduced. Mechanically resistant components 11b-16b can therefore be produced in a more sustainable manner.

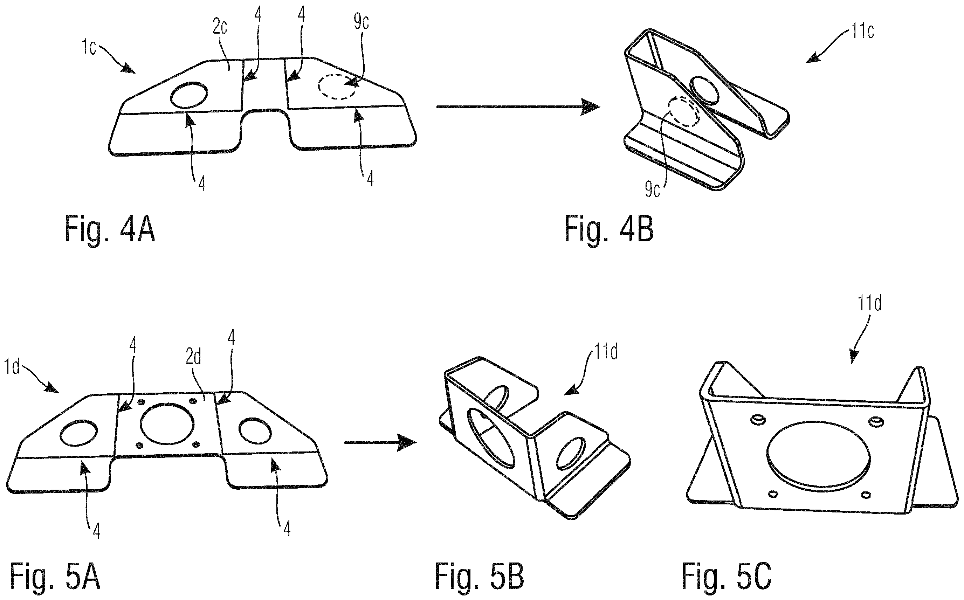

Fig. 4A illustrates a third embodiment and shows a 3D-printed part 1c comprising an essentially flat, plate-shaped section 2c including a round hole as well as a portion of increased material thickness. By post-processing S3 as described above, including local introduction of heat in the vicinity of four bending lines 4 and subsequent bending along these, a bracket-type object 11c is produced. In the finished object 11c, illustrated in Fig. 4B, the thickened portion 9c is arranged opposite the round hole.

In Figs. 5A-5C, production of an object 11d from a 3D-printed part 1d in accordance with a fourth embodiment is shown. The exemplary part 1d is formed with a plate-shaped section 2d, provided with a plurality of round openings of different sizes. In the post-processing step S3, the plate-shaped section 2d is locally heated in the vicinity of each of four bending lines 4. Then, bending along each of these lines 4 is performed. After cooling, the object 11d is obtained, which can be used as an electrical connector bracket, for instance.

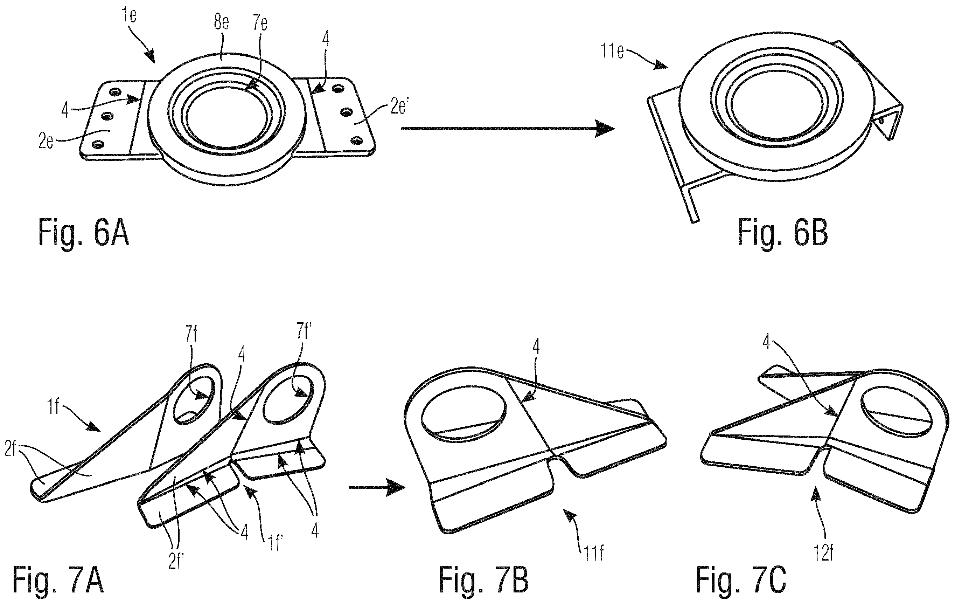

Fig. 6A displays an exemplary 3D printed part 1e which will be post-processed in a method according to a fifth embodiment in order to obtain an object 11e, shown in Fig. 6B, which is adapted for use as a bearing support or a flange connection.

The part 1e comprises two plate-shaped sections 2e, 2e' arranged on opposite sides of a ring-like portion 8e and connected thereto. An outer diameter of the ring-like portion 8e is greater than a width of each of the plate-shaped sections 2e. Each of the sections 2e is provided with several holes, which may be used for purposes of attachment. A thickness of the ring-like portion 8e is greater than a thickness of each of the sections 2e, and a radial cross-section of the ring-like portion 8e is formed with a rounded step.

Within each of the plate-shaped sections 2e, a bending line 4 is defined. After local heating, each plate-shaped section 2e is bent along the line 4 in the post-processing step S3, through an exemplary angle of approximately 90 degrees.

A sixth embodiment of the invention is illustrated in Fig. 7A-7C. A first part 1f and second part 1f', each formed with a plate-shaped section 2f, 2f' and with an opening 7f, 7f', are produced by 3D-printing in step S2. During post-processing, the parts 1f, 1f' are then each locally heated and deformed along bending lines 4. After cooling and demasking, the parts 1f, 1f' are assembled in a symmetrical manner to form an object 11f which may be designated a bionic bracket. Depending on the load which, according to the intended use of the bracket 11f, e.g. in an aircraft, acts on the large opening formed by the matching round openings 7f, 7f' provided in the individual parts 1f, 1f', and in particular depending on the direction of action of that load, the shape of the finally obtained object 11f may be adapted by varying the angles through which the plate-shaped sections 2f, 2f' are bent during the post-processing step. In this manner, the overall shape of the bionic bracket 11f can be adapted to the particular application and load direction, for improved load transfer.

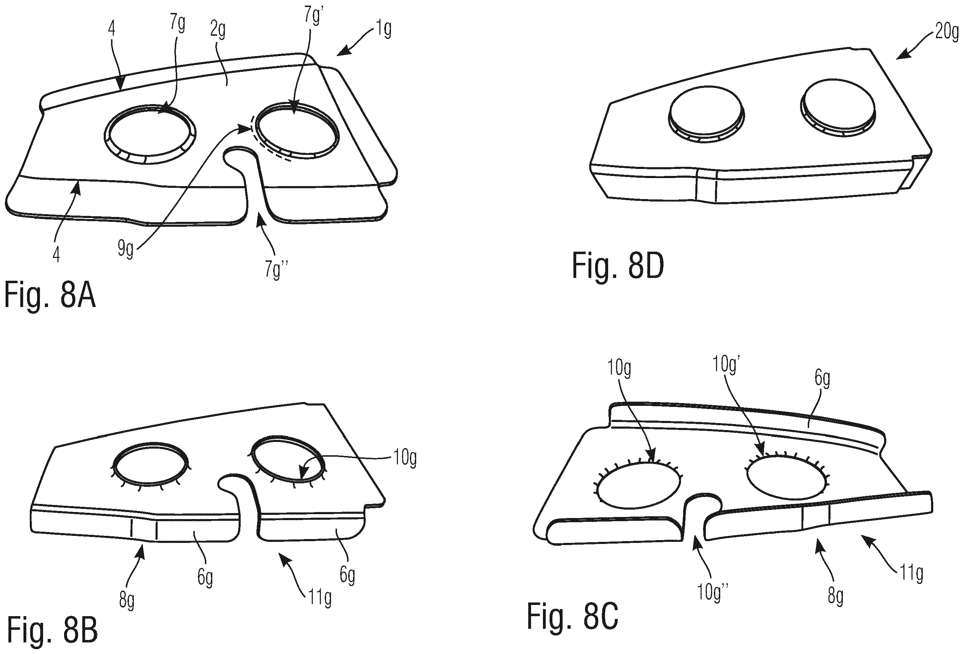

Fig. 8A-8D illustrate an seventh embodiment of the invention. Fig. 8A displays a 3D-printed part 1g which is formed with a plate-shaped section 2g. Within the plate-shaped section 2g, a region of increased thickness, or "bead", 9g, may be provided. In Fig. 8A, only an exemplary location of such a "bead" is schematically indicated.

Furthermore, the 3D-printed part 1g is provided with round openings 7g, 7g' as well as with a recess 7g" which extends into the plate-shaped section 2g from an edge thereof.

After masking and local heating, the plate-shaped section 2g is deformed in step S34 using a tool 20g. The tool 20g has been produced using 3D-printing, too, and may be made from metal, for example. Yet, in another variant, the tool 20g might be provided using another manufacturing process.

Using the tool 20g, the edges of the through-holes 7g, 7g' are deformed and thereby are each provided with a flared rim, in order to increase the stability of these edges. During masking, the edges of the holes 7g, 7g' are not masked but remain exposed, so that these can be heated in the same manner as the areas of the bending lines 4. In this manner, stable lightening holes 10g, 10g' with flared rim are formed, which help to save weight in the final object 11g. Further, using the tool or jig 20g, the plate-shaped section 2g is bent along the bending lines 4, indicated in Fig. 8A, to form flanges 6g. Moreover, using the tool 20g, one of the flanges 6g is additionally deformed in a direction transverse to the main surface of the flange, in order to provide it with an offset in the manner of a smoothed step-like shape or smoothed offset, a so-called "joggle" 8g.

In this manner, using 3D-printing to produce the part 1g, and post-processing the part 1g, a robust, mechanically resistant object 11g is formed in a cost-effective and sustainable manner. In exemplary manner, the object 11g of Fig. 8C-8D is formed as a wing rib. The joggle 8g makes it possible to smoothly arrange the corresponding flange 6g on an inner side of the wing skin, in particular if another element is placed onto that inner side, e.g. for reinforcement. Further, the recess 7g", separating two flanges 6g from each other, forms a so-called "mouse-hole" or stringer hole 10g" in the finished wing rib 11g. When a wing structure is assembled, the "mouse-hole" 10g" accommodates a stringer, not shown in the figures, running transverse to the wing rib 11g. A flange 6g may, in a variant, be provided with a double joogle if necessary, i.e. with two subsequent smooth offsets.

In other variants, further structural re-inforcing elements such as brackets or stringers may be produced using the method as proposed by the invention, and may be provided with one or more joggles.

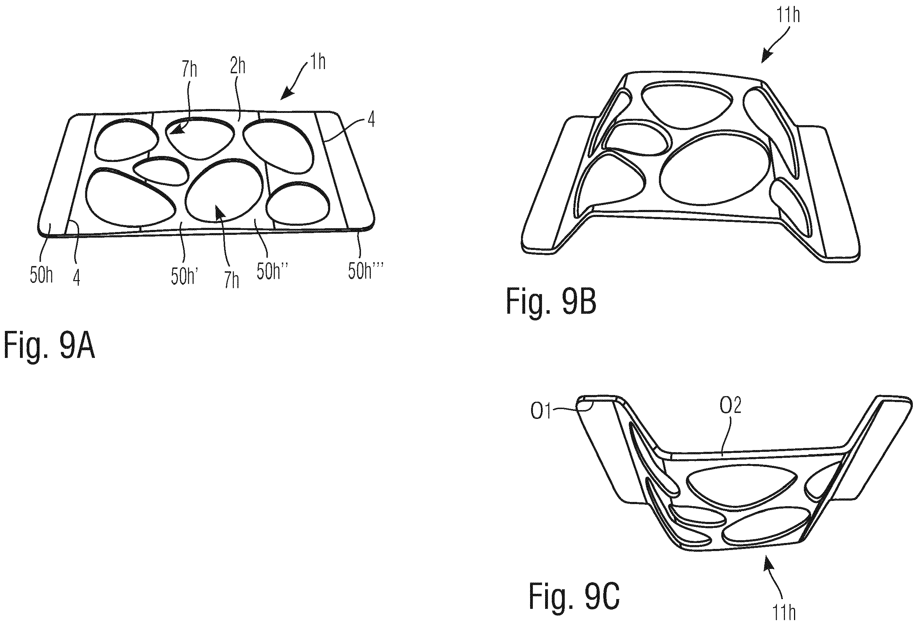

An eight embodiment is illustrated in Figs. 9A-9C. A 3D-printed part 1h is produced which comprises a plate-shaped section 2h, additively manufactured layer by layer, and is provided with a complex pattern of openings 7h, a so-called Voronoi pattern. Additionally, the plate-shaped section 2h comprises regions of different material thickness. Fig. 9A shows, in exemplary manner, regions 50h, 50h', 50h", 50h'" where the thickness of the plate-shaped sections 2h is different. For instance, in region 50h, the material thickness may be approximately t = 2 mm; in region 50h', the material thickness may be approximately t = 5 mm; in region 50h", a transition from a material thickness of approximately t = 5 mm to approximately t = 2.5 mm may be present; and in region 50h"', the material thickness may be approximately t = 2.5 mm.

Several bending lines 4 are defined along which the plate-shaped section 2h is bent during the post-processing step. The final object 11h obtained in this manner includes visible differences in material thickness.

The 3D-printed part 1h embedding a Voronoi pattern or Voronoi patterns may as such be designed using generative design techniques. Such a part 1h may provide an opportunity for low-cost and multi-target optimized objects 11h obtained by post-processing the part 1h, wherein the targets of optimization may include e.g. low cost, low weight, reduced material usage, versatile design, retrofittability, etc..

In variants of the embodiment of Figs. 9A-9C, instead of being provided with a grid defined by openings formed according to a Voronoi pattern, the plate-shaped section may be provided with a different kind of lattice or instead with an isogrid or a geodetic structure. Such complex stiffening structures may be created in the 3D printing step, and additional deformation, e.g. as in Figs. 9A-9C, may be performed afterwards in the post-processing step. Alternatively, instead of printing the structurally stiffening structures on a plate-shaped section, deep drawing or press forming in the post-processing step could embed a lattice, Voronoi pattern, an isogrid or a geodetic structure in a part that has been 3D printed before.

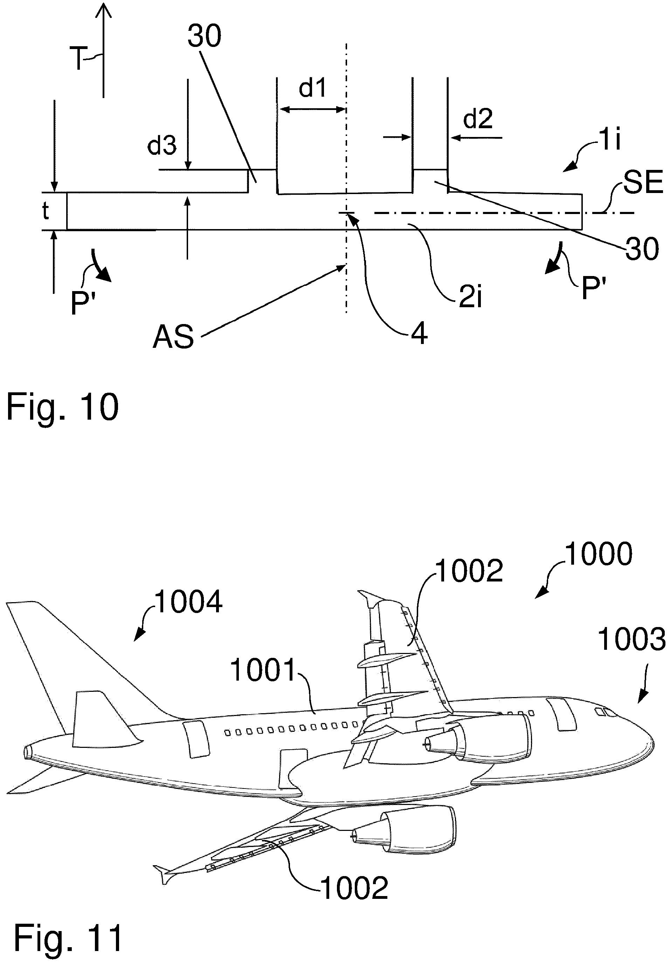

Fig. 10 illustrates a way to further improve, according to a further embodiment of the invention, the accuracy of bending along a bending line 4. The principles which will be set forth below with reference to Fig. 10 may also be used in the other embodiments disclosed herein.

In Fig. 10, a sectional view of a 3D-printed part 1i is shown. A projected bending line 4 runs perpendicular to the drawing plane in Fig. 10. Further, the part 1i is symmetric at least in the vicinity of the bending line 4, with respect to an axis of symmetry AS, which preferably crosses the bending line 4.

The 3D-printed part 1i comprises a plate-shaped section 2i having a thickness t. On one of the main surfaces of the plate-shaped section 2i, which in Fig. 10 in exemplary manner corresponds to the upper surface thereof, the part 1i is provided with two raised portions 30, which in particular are formed in the manner of ribs formed on the upper main surface of the section 2i. The portions 30 are arranged symmetric with respect to an axis of symmetry AS. Both portions 30 are formed with the same height d3 with respect to the main surface of the section 2i. Further, both portions 30 are formed with the same width d2, measured transverse to a longitudinal direction of the portion 30, perpendicular to the height d3 and along the main surface of extension SE of the layers from which the part 1i is formed. A distance of each of the portions 30 from the axis of symmetry AS is designated d1 in Fig. 10.

An experiment was conducted in order to assess the effects of different parameters d1, d2, d3, for the geometry displayed in Fig. 10. For this experiment, the thickness of the plate-shaped section 2i was t = 2 mm, and during post-processing, the plate-shaped section 2i was bent along the line 4, after local heating, with a bend radius of R = 4 mm = 2t. The following combinations were experimentally tested:

| | | | |
|---|---|---|---|
| test specimen No. 1: | d1 = 1t | d2 = t | d3 = 0.2t |
| test specimen No. 2: | d1 = 2t | d2 = t | d3 = 0.2t |
| test specimen No. 3: | d1 = 3t | d2 = t | d3 = 0.2t |
| test specimen No. 4: | d1 = 2t | d2 = t | d3 = 0.4t |
| test specimen No. 5: | d1 = 2t | d2 = t | d3 = 0.6t |
| test specimen No. 6: | d1 = 2t | d2 = t | d3 = 0.8t |

The test specimens were 3D-printed using fused deposition modeling. As a material, PLA (polylactic acid) was used and the specimens were 3D-printed with 100 percent infill during the slicing process. Thermal properties of PLA are similar to those of polyetherimide or PEI. Post-processing of each of the test specimens Nos. 1-6 in the manner described above with reference to Fig. 1A-1F to form an angle-type object was conducted, including masking the specimen, locally heating the material in the vicinity of the line 4, and bending along line 4 through an angle of approximately 90 degrees. The bending was performed in such a manner that after bending, the portions 30 are on the outer side of the angle-type shape. In other words, bending was performed as indicated by arrows P' in Fig. 10.

The portions 30 help to control the local response of the plate-shaped section 2i to local heating around the bending line 4 and help to concentrate the heat around the bending line 4, and hence can contribute to improving the accuracy of the bend. Of those specimens listed above and tested, test specimen No. 2 showed the most preferable and accurate bending behaviour.

As an example of an aircraft or spacecraft, a passenger aeroplane 1000 is schematically illustrated in Fig. 11. The aircraft 1000 comprises a fuselage 1001 and wings 1002, and has a nose 1003 and an empennage 1004. Any one of the objects 11a, 11b-16b, 11c, 11d, 11e, 11f, 12f, 11g, 11h, 11i may be used in an aircraft or spacecraft such as, for example, the aircraft 1000 of Fig. 11, e.g. as a structural component or as a component for interior trim or as a component for forming or attaching various devices, installations or systems within the aircraft, e.g. in the cabin.

A use objects such as objects 11a, 11b-16b, 11c, 11d, 11e, 11f, 12f, 11g, 11h, 11i is also conceivable in an unmanned aircraft, e.g. a drone, instead of an aeroplane.

Alternatively, objects such as objects 11a, 11b-16b, 11c, 11d, 11e, 11f, 12f, 11g, 11h, 11i can be defined for use as a component of a land vehicle, e.g. an automobile or truck, or of a watercraft, e.g. a ship, as a component of a defense or security craft, as a component for use in or as part of a building, as a component of a medical device, as a component of a consumer good, or as a package or an element thereof.

The object or component, such as object 11a, 11b-16b, 11c, 11d, 11e, 11f, 12f, 11g, 11h, 11i, may be provided by the method described herein for use in a new product or device, e.g. a new aircraft 1000, or for retrofitting an existing product or device, e.g. an existing aircraft 1000.

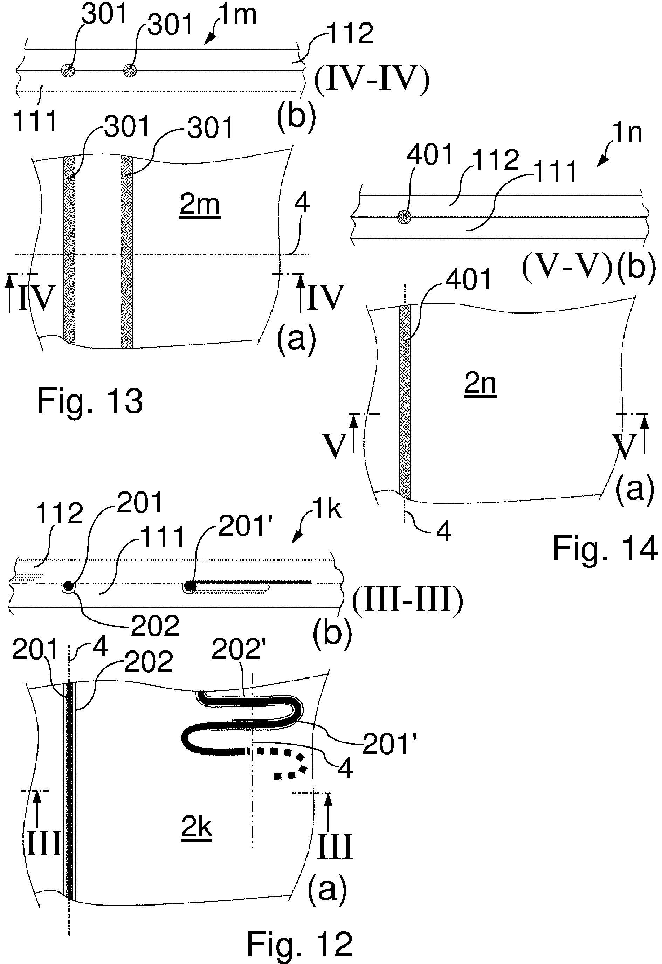

Fig. 12 illustrates a ninth embodiment of the invention. During 3D-printing a part 1k in step S2, a first layer group 111 is deposited, and during the additive manufacturing process, a groove 202 or 202' is formed. The groove may be straight, as shown in exemplary manner for groove 202, or the groove may follow a curved or meandering path, as shown in exemplary manner for groove 202'.

Then, a heating element 201, 201' is disposed in the groove 202 or 202', respectively. Subsequently, additive manufacturing is continued by depositing a further layer group 112. Thereby, a plate-shaped section 2k formed with the layer groups 111, 112, and finally the printed part 1k, are completed.

The heating elements 201, 201' each may be formed as or comprise a metal wire and may be adapted to heat the surrounding thermoplastic material if an electric current is sent through the heating element 201, 201'. In this manner, local heating of the material of the 3D-printed part 1k can be accomplished in a precise manner and without an external heating device. For bending along a straight line 4, the wire 201 may e.g. extend along the line 4. The elements 201, 201' then remain in the final object, obtained after deformation in substep S34, and could be used for further purposes. For instance, elements 201, 201' formed with metal wires can be used later for electrical or health monitoring purposes.

In a variant, the elements 201, 201' could be replaced by wires 201, 201' made from a shape memory material, in particular a metallic shape memory alloy ("SMA"). Alternatively, a thin SMA foil or plate could be embedded in the 3D-printed part. The SMA elements are "trained" before being embedded or integrated into the 3D-printed part to assume a defined shape when being warmed up to a sufficient temperature, in particular by sending an electric current through the SMA element. In such variants, at least part or all of the deformation to be caused in substep S34 can be accomplished via the action of the SMA elements upon heating, without application of external force or pressure. In particular, the SMA elements could be used both for performiung local heating of the 3D-printed part 1k and for changing the form of the part 1k to a predefined, "trained" shape.

In a further variant, the wire 201 and/or 201' might be replaced by a tube-shaped element, which may be embedded in the 3D printed part and may be used for locally heating the part 1k. For example, a heated fluid may be caused to flow through tube 201 or 201' at an appropriate temperature.

A tenth embodiment is schematically illustrated in Fig. 13. Similar to Fig. 12, a layer group 111 is printed, including grooves, which in Fig. 13 are shown as being straight, in exemplary manner. The grooves are filled with a curable resin 301, preferably a resin which is curable using ultraviolet radiation, and a layer group 112 is added to complete a 3D-printed part 1m. In Fig. 13, the resin-filled grooves extend transverse to a bending line 4. The resin-filled grooves could also be open, for example on the upper side in Fig. 13, in the completed part 1m, so as to expose the resin 301.

In the tenth embodiment, the part 1m can be locally heated and deformed by bending the plate-shaped section 2m along line 4 during the post-processing. Then, in a subsequent substep of post-processing, the resin 301 is cured by irradiating the bent part with UV radiation. Thereby, the finished object can be provided with additional stiffness in the area that has been deformed, which may be useful in the case of complex thermoelastic deformation patterns. The object obtained after the post-processing is hence even more robust and stable.

Instead of the curable resin 301, the grooves may be filled, in a variant of the embodiment of Fig. 13, with a highly energetic material. Reaction of such highly energetic material may be externally triggered at an appropriate instant. In this manner, a separable object can be provided, which may be useful, for example, for use in space or defense or security technology, as a release or separation device.

In the eleventh embodiment, sketched in Fig. 14, during the printing process, a groove similar to those of Figs. 12, 13 is filled with an elastomer 401. In this manner, a mechanical dampening effect can be implemented. The elastomer 401 may be arranged in other shapes, different from the example of Fig. 14, and the groove might not be covered e.g. on the upper side of the part 1n, in Fig. 14, to improve the elastic effect.

The highly energetic material, elastomer or curable resin may in some variants be integrated into the 3D printed part using multi-material 3D printing.

Further, it is conceivable, for instance, to mix the molten thermoplastic material, prior to extrusion, with a powder providing the material with specific properties. For instance, (a) specific layer(s) can be provided with modified properties.

Also, for example, the properties of the 3D-printed part could be locally modified by modifying the extruded material to avoid masking and facilitate local warming exactly in the area that is to be post-processed including deformation. In this case, metallic powder can be mixed with the molten thermoplastic prior to extrusion, which will increase the thermal conductivity, so that the areas which are to be deformed are heated more exactly.

Further, for example, magnetic or electromagnetic fields could even be used to accomplish the local heating of "smart" materials, or induce another change in structure of the material that facilitates the deformation, which persists after removing the field(s).

It should be noted that in particular the principles of design, 3D printing, and post-processing, explained above with respect to the schematic drawings in Figs. 1-3, as well as 10 and 12-14, can be applied each of the embodiments shown in Figs. 4-9, too. Combinations of features of the embodiments of Figs. 1-14 are conceivable in a multitude of ways.

Furthermore, deformation techniques explained above, in particular bending, as well as deep-drawing, press-forming, embossing or impressing using a tool such as e.g. tool 20g, may be combined depending on the final shape of the object desired.

While force may be applied externally in order to accomplish the above-mentioned re-shaping operations, deformation of the 3D-printed part may accomplished instead using pressure, e.g. air pressure, for example using a vacuum bag.

In particular in the embodiment of Fig. 12, the undeformed part 1k can be placed onto a mould and covered with a vacuum bag. Then, using the heating elements 201, 201' the part 1k can be locally heated and softened in those areas that are to be deformed. The deformation will then be brought about by air pressure upon evacuation of the space enclosed by the bag. In this manner, the part 1k can be re-shaped in order to assume a target shape defined by the mould.

With reference to Fig. 11, application of any one of the embodiments herein to an aircraft 1000 has been described. Yet, in further embodiments, the method of the invention may be useful also in the field of space travel. For instance, spare parts could be produced in space as needed. 3D-printing by fused deposition modeling or fused filament fabrication may be useable also in a low-gravity or zero-gravity environment, and the mechanical properties of the printed parts can be enhanced by post-processing operations including local heating and deforming the printed part, as described above.

Further, in all of the embodiments described above, the 3D-printed part and/or the object obtained after post-processing may additionally be processed in a material-removing manner, for instance by machining and/or cutting and/or drilling, if required or desirable. Further, alternatively or in addition to a material-removing processing, steps of welding, e.g. plastics welding or stir welding, could be performed. Also, objects obtained using the above-described post-processing may be joined by welding or adhesive bonding. See e.g. Figs. 7A-7C in which two 3D-printed parts 1f, 1f' are deformed in a targeted manner by bending, and then are joined. Also, an object obtained using the method described herein may be subjected to laser engraving.

In all of the embodiments explained above, the 3D printing step may rely on one or more printable materials, e.g. multi-material 3D printing can be performed in step S2. E.g., the material may be changed during the printing process or another material may be printed using a further printing head, so that another material with different properties is added. Such a procedure may help to facilitate post-processing steps, in particular by bending or deep-drawing etc., but also may facilitate subsequent machining and/or may improve or modify material strength.

During the 3D printing process, or during the post-processing, materials or elements may be embedded locally that can change their optical or mechanical properties when activated in operation, e.g. through an external force or physical action. For instance, a heater element might be applied onto a finished object in an area previously deformed in the post-processing step as described above, and by activating the heater element, another change in shape might be brought about.

Also, instead of filling or arranging a highly energetic material in the groove(s) as noted above with respect to Fig. 13, such a material may be provided in the form of a rigid element, paste, paint or powder applied or arranged on an external surface of the 3D-printed part 1m or of the post-processed object. Targeted breaking of the object can hence be brought above, e.g. for defence or space applications, as a release mechanism or for other purposes.

Although the invention has been completely described above with reference to preferred embodiments, the invention is not limited to these embodiments but may be modified in many ways.

### List of reference signs

- 1a-1e, 1f, 1f': part
- 1g 1h, 1i: part
- 1k,1m,1n: part
- 2a-2d, 2e, 2e': plate-shaped section
- 2f, 2f', 2g, 2h: plate-shaped section
- 2i, 2k,2m,2n: plate-shaped section
- 3: masking material
- 4: line
- 5: clamping device
- 5', 5": clamping portion
- 6a, 6a', 6b, 6b': leg
- 6g: flange
- 7a: hole
- 7b, 7b', 7b": through-hole with printed raised rim
- 7e, 7f, 7f': opening
- 7g, 7g': opening
- 7g": recess
- 7h: opening
- 8b, 8b': intermediate leg portion
- 8e: ring-like portion
- 8g: joggle
- 9c, 9g: portion having increased material thickness
- 10g, 10g': opening with flared rim
- 10g": mouse hole
- 11a-11h: object
- 12b, 12f: object
- 13b, 14b: object
- 15b, 16b: object
- 20g: 3D-printed tool
- 30: raised portion
- 50h, 50h': region
- 50h", 50h'": region
- 100: filament
- 101-105: layer
- 111: layer group
- 112: layer group
- 201, 201': metal wire
- 202, 202': groove
- 301: additional curable resin
- 401: additional elastic material
- 1000: aircraft
- 1001: fuselage
- 1002: wing
- 1003: nose
- 1004: empennage
- AS: axis of symmetry
- d1: distance
- d2: width
- d3: height
- F, F': load
- O1: first location
- O2: second location
- P, P': arrow indicating bending
- R: bending radius
- SE: main surface of extension
- T: transverse direction
- t: thickness (plate-shaped section)
- S1, S2, S3: step
- S31, S32: substeps of step S3
- S33, S34: substeps of step S3

## Claims

1. Method of producing an object (11a, 11b-16b, 11c, 11d, 11e, 11f, 12f, 11g, 11h), the method comprising:
3D-printing (S2) a part (1a-1e, 1f, 1f', 1g-1i, 1k, 1m, 1n) or at least a portion thereof in layers (101-105); and
post-processing (S3) the 3D-printed part (1a-1e, 1f, 1f, 1g-1i, 1k, 1m, 1n) to obtain the object (11a, 11b-16b, 11c, 11d, 11e, 11f, 12f, 11g, 11h), wherein the post-processing (S3) includes causing deformation (S34) of the 3D-printed part (1a-1e, 1f, 1f', 1g-1i, 1k, 1m, 1n) in such a manner that a shape of a main surface of extension (SE) of the layers (101-105) is modified.

2. Method according to claim 1,
**characterized in that** the step (S2) of 3D-printing the part (1a-1e, 1f, 1f', 1g-1i, 1k, 1m, 1n) includes additively manufacturing the part (1a-1e, 1f, 1f', 1g-1i, 1k, 1m, 1n) or the portion thereof using a process of fused deposition modeling or fused filament fabrication and/or **in that** the step (S2) of 3D-printing the part (1a-1e, 1f, 1f', 1g-1i, 1k, 1m, 1n) includes additively manufacturing the part (1a-1e, 1f, 1f', 1g-1i, 1k, 1m, 1n) or the portion thereof from a synthetic material, in particular a thermoplastic synthetic material.

3. Method according to claim 1 or 2,
**characterized in that** the 3D-printed part (1a-1e, 1f, 1f', 1g-1i, 1k, 1m, 1n) comprises at least a plate-shaped section (2a-2d, 2e, 2e', 2f, 2f', 2g-2i, 2k, 2m, 2n), the layers (101-105) being arranged one on top of another in a transverse direction (T) of the plate-shaped section (2a-2d, 2e, 2e', 2f, 2f', 2g-2i, 2k, 2m, 2n), and further in particular **in that** the post-processing (S3) includes causing deformation (S34) of the plate-shaped section (2a-2d, 2e, 2e', 2f, 2f', 2g-2i, 2k, 2m, 2n).

4. Method according to at least one of the preceding claims,
**characterized in that** the method includes, prior to 3D-printing (S2), steps of defining a 3D target final shape of the object (11a, 11b-16b, 11c, 11d, 11e, 11f, 12f, 11g, 11h);
defining a 3D target shape of the 3D-printed part (1a-1e, 1f, 1f', 1g-1i, 1k, 1m, 1n); and
defining a re-shaping operation or a sequence of re-shaping operations capable of transforming the 3D-printed part (1a-1e, 1f, 1f', 1g-1i, 1k, 1m, 1n) into the object (11a, 11b-16b, 11c, 11d, 11e, 11f, 12f, 11g, 11h) or into a portion thereof.

5. Method according to at least one of the preceding claims,
**characterized in that** the method includes, prior to 3D-printing (S2), steps of defining a plurality of 3D target final shapes;
defining a 3D target shape of the 3D-printed part (1a-1e, 1f, 1f', 1g-1i, 1k, 1m, 1n); and
defining, for each one of the plurality of 3D target final shapes, an assigned re-shaping operation or assigned sequence of re-shaping operations capable of transforming the 3D-printed part (1a-1e, 1f, 1f', 1g-1i, 1k, 1m, 1n) into an object (11a, 11b-16b, 11c, 11d, 11e, 11f, 12f, 11g, 11h) having the one of the plurality of 3D target final shapes or into a portion thereof.

6. Method according to at least one of the preceding claims,
**characterized in that** the method comprises producing two or more objects (11b-16b, 11f, 12f) having different final shapes, or portions of such objects, from 3D-printed parts (1b, 1f, 1f') each having the same shape by deformation of the 3D-printed part (1b, 1f, 1f') in a different manner in the post-processing step (S3) in each case.

7. Method according to at least one of the preceding claims,
**characterized in that** deformation of the part (1a-1e, 1f, 1f', 1g-1i, 1k, 1m, 1n) in the step of post-processing (S3) comprises deforming the part (1a-1e, 1f, 1f', 1g-1i, 1k, 1m, 1n) by applying external force and/or pressure.

8. Method according to at least one of the preceding claims,
**characterized in that** the step of post-processing (S3) the 3D-printed part (1a-1e, 1f, 1f', 1g-1i, 1k, 1m, 1n) includes introducing heat into the 3D-printed part (1a-1e, 1f, 1f', 1g-1i, 1k, 1m, 1n) or causing heat to be generated or released in or on the 3D-printed part (1a-1e, 1f, 1f', 1g-1i, 1k, 1m, 1n), in particular includes locally introducing heat into the 3D-printed part (1a-1e, 1f, 1f', 1g-1i, 1k, 1m, 1n) or causing heat to be locally generated or released in or on the 3D-printed part (1a-1e, 1f, 1f', 1g-1i, 1k, 1m, 1n).

9. Method according to at least one of the preceding claims,
**characterized in that** the step of post-processing the 3D-printed part (1a-1e, 1f, 1f', 1g-1i, 1k, 1m, 1n) includes masking the 3D-printed part (1a-1e, 1f, 1f', 1g-1i, 1k, 1m, 1n).

10. Method according to at least one of the preceding claims,
**characterized in that** causing deformation (S34) of the part (1a-1e, 1f, 1f', 1g-1i, 1k, 1m, 1n) in the step of post-processing (S3) includes deforming the part (1a-1e, 1f, 1f', 1g-1i, 1k, 1m, 1n) by bending the part (1a-1e, 1f, 1f', 1g-1i, 1k, 1m, 1n) or a portion thereof.

11. Method according to at least one of the preceding claims,
**characterized in that** causing deformation (S34) of the part (1a-1e, 1f, 1f', 1g-1i, 1k, 1m, 1n) in the step of post-processing (S3) includes deforming the part (1a-1e, 1f, 1f', 1g-1i, 1k, 1m, 1n) by deep-drawing or press-forming or embossing or impressing the part (1a-1e, 1f, 1f', 1g-1i, 1k, 1m, 1n) or a portion thereof.

12. Method according to at least one of the preceding claims,
**characterized in that** the method is a method of producing
a component of an aircraft or spacecraft (1000) or of a land vehicle or watercraft, or
a component of a defense or security device, or
a component for use in or as part of a building, or
a component of a medical device, or
a component of a consumer good, or
a package or an element thereof.

13. Method according to at least one of the preceding claims,
**characterized in that** the method is a method of producing a component for use in a new product or device (1000) or for retrofitting an existing product or device.

14. Object (11a, 11b-16b, 11c, 11d, 11e, 11f, 12f, 11g, 11h) produced or producible using the method according to at least one of the preceding claims.

15. Aircraft or spacecraft (1000) comprising an object (11a, 11b-16b, 11c, 11d, 11e, 11f, 12f, 11g, 11h) according to claim 14.
